# EUROPEAN PATENT SPECIFICATION

(11) **EP 1 710 014 B1**
(45) Date of publication and mention of the grant of the patent: **27.09.2017**
(21) Application number: 05704340.8
(22) Date of filing: 26.01.2005
(51) Int. Cl.: B01J 23/42, B01J 35/06, D06M 11/83, D06M 101/40, H01M 4/96

(54) **CATALYST SUPPORT AND FUEL CELL USING SAME**
KATALYSATORTRÄGER UND BRENNSTOFFZELLE DAMIT
SUPPORT DE CATALYSEUR ET PILE A COMBUSTIBLE L'UTILISANT

(30) Priority: 27.01.2004 JP 2004018879
(43) Date of publication of application: 11.10.2006
(73) Proprietor: SHOWA DENKO K.K., Tokyo 105-8518 (JP)
(72) Inventor: OTA, Ken-ichiro, c/o Yokohama National University, Yokohama-shi, Kanagawa 240-8501 (JP); ISHIHARA, Akimitsu, Yokohama National University, Yokohama-shi, Kanagawa 240-8501 (JP); IINOU, Satoshi, c/o Omachi Plant, Showa Denko K.K., Omachi-shi, Nagano 398-0002 (JP); SUDOH, Akinori, c/o Omachi Plant, Showa Denko K.K., Omachi-shi, Nagano 398-0002 (JP)
(74) Representative: Strehl Schübel-Hopf & Partner
(86) International application number: PCT/JP2005/001442
(87) International publication number: WO 2005/070535

(56) References cited:
- EP-A2- 1 553 052
- WO-A1-02/056404
- WO-A1-2005/023937
- WO-A2-2004/099477
- WO-A2-2004/101664
- JP-A- 1 119 340
- JP-A- 6 081 218
- JP-A- 2003 246 613
- US-A1- 2003 044 603
- US-A1- 2004 041 130
- Morinobu Endo ET AL: "Selective and Efficient Impregnation of Metal Nanoparticles on Cup-Stacked-Type Carbon Nanofibers", Nano Letters, vol. 3, no. 6, 1 June 2003 (2003-06-01), pages 723-726, XP055164493, ISSN: 1530-6984, DOI: 10.1021/nl034136h
- T. Yoshitake ET AL: "Preparation of fine platinum catalyst supported on single-wall carbon nanohorns for fuel cell application", Physica B: Condensed Matter, vol. 323, no. 1-4, 1 October 2002 (2002-10-01), pages 124-126, XP055164504, ISSN: 0921-4526, DOI: 10.1016/S0921-4526(02)00871-2
- ENDO M ET AL: "Structural characterization of cup-stacked-type nanofibers with an entirely hollow core", APPLIED PHYSICS LETTERS, A I P PUBLISHING LLC, US, vol. 80, no. 7, 18 February 2002 (2002-02-18), pages 1267-1269, XP012031610, ISSN: 0003-6951, DOI: 10.1063/1.1450264
- KIM Y A ET AL: "Effect of ball milling on morphology of cup-stacked carbon nanotubes", CHEMICAL PHYSICS LETTERS, ELSEVIER BV, NL, vol. 355, 2 April 2002 (2002-04-02), pages 279-284, XP003020842, ISSN: 0009-2614, DOI: 10.1016/S0009-2614(02)00248-8

## Description

### TECHNICAL FIELD

The present invention relates to a carried catalyst. More particularly, the present invention relates to a carried catalyst, which can be used as an electrode catalyst of a fuel battery, wherein a catalyst metal is carried on a vapor-grown carbon fiber; a production method for the carried catalyst; and a fuel battery using the carried catalyst.

### BACKGROUND ART

A solid polymer type fuel battery is attracting attention to be used for a cell automobile and a portable power supply since it is compact and can obtain a high current density when operated at room temperature compared with a phosphoric-acid type fuel battery and a molten carbonate type fuel battery. Further, many proposals on components, system compositions and the like in such fields have been made. A stack structure of a conventional solid polymer type fuel battery is a sandwich structure of, for example, of separator/electrode (oxygen electrode)/electrolyte membrane/electrode (hydrogen electrode)/separator. Required characteristics of an electrode for this fuel battery are to prevent the electrode from poisoning by carbon monoxide and to enhance activity per unit amount of a catalyst metal. For the purpose of preventing such poisoning and enhancing the activity, many trials have been made to date on metals or alloys thereof to be used as catalysts as described in JP-A-2001-85020 (US 6, 689, 505), which describes that a particle size of a catalyst is preferably several nm.

On the other hand, as for carbon to be used for a carrier, particulate carbon such as ordinary carbon black is used as described in JP-A-8-117598, JP-A-2003-201417 (EP 1309024) and JP-A-2001-357857. However, since the contact between carbon particles is conducted by a point contact, there is a problem that resistance is large and gas permeability is insufficient. In order to solve these problems, it has been considered effective to change the particulate carbon to fiber carbon to be used for the carrier as described in JP-A-7-262997, JP-A-2003-317742 and JP-A-2003-200052.

As for carbon fibers, a vapor-grown carbon fiber, a carbon nanotube and a PAN type carbon fiber are known. However, in any of reports which have been made public to date, a technique to produce an electrode comprising a carbon fiber on which fine catalyst particles are uniformly carried with a high density has not been described.

US 2004/0041130 A1 discloses a graphitized fine carbon fiber comprising a hollow space extending along its center axis, and a plurality of graphene sheets.

US2003/0044603A1 discloses vapor grown carbon fibers comprising a hollow space along the fiber in its interior and having a multilayer structure, an outer diameter of 2 to 500 nm and an aspect ratio of 10 to 15000.

WO 02/056404 A1 discloses carbon fibers which are inserted between a gas diffusion sheet 8 and a catalyst layer comprising catalyst-bearing carbon particles.

JP H01119340 discloses supporting Fe on a catalyst after introducing an acidic functional group into carbon fibers of 3 µm or less.

JP2003-246613 discloses supporting metal on a catalyst by surface treatment of carbon nanotubes with a hydrogen peroxide solution.

Morinobu Endo et al., in Nano Letters, Vol. 3, No. 6, 1 June 2003, pages 723-726 disclose the impregnation of cup-stacked-type carbon nanofibers with metal nanoparticles.

T. Yoshitake et al. Physica B, Vol. 323, No.1-4 (2002), pages 124-126 disclose the support of fine platinum metal on single wall carbon nanohorns.

### DISCLOSURE OF THE INVENTION

An object of the present invention is to provide a vapor-grown carbon fiber capable of enhancing an activity per unit amount of a catalyst metal, reducing a reaction resistance and enhancing an output density and appropriate as a carried catalyst, a catalyst carrying a metal catalyst, production methods thereof and an application thereof for a fuel battery.

The present invention provides a catalyst carrier, a production method and an application thereof as follows:
1. A carried catalyst, being characterized in that at least one catalyst metal for promoting an oxidation-reduction reaction selected from the group consisting of platinum and transition metals belonging to the period 5 in the periodic table or any one of alloys thereof is carried on a vapor-grown carbon fiber,
   - wherein the fiber has been synthesized by using ferrocene or nickelocene as a catalyst,
   - the fiber has been subjected to a crushing treatment so as to have a BET specific surface area of from 4 m²/g to 500 m²/g, an average fiber length of from 2 to 100 µm and an aspect ratio of from 1 to 200, and the fiber having an average outer diameter of from 2 nm to 500 nm,
   - wherein the fiber has amulti-layer structure of graphene sheets including a hollow space in its center portion, wherein the graphene sheets have a growth ring structure, and
   - wherein the fiber has a ratio (Id/Ig) of a peak height (Id) of the band at 1341 to 1349 cm⁻¹ to a peak height (Ig) of the band at 1570 to 1578 cm⁻¹ in a Raman scattering spectrum of 1 or more,
   - wherein the average grain diameter of the catalyst metal carried on the crushed vapour-grown carbon fiber is 15 nm or less.
2. The carried catalyst as described in 1 above, wherein the vapor-grown carbon fiber is a carbon fiber comprising a branched vapor-grown carbon fiber.
3. A production method for a carried catalyst of 1 or 2 above, characterized by supporting said catalyst metal or said any one of alloys thereof on said vapor-grown carbon fiber, which has been obtained by thermally decomposing hydrocarbon by using ferrocene or nickelocene as a catalyst, and optionally performing a thermal treatment of the thus-obtained vapor-grown carbon fiber at a temperature of from 600°C to 1300°C in an atmosphere of an inert gas, which have been crushed so as to have a BET specific surface area of from 4 m²/g to 500 m²/g, an average fiber length of from 2 to 100 µm and an aspect ratio of from 1 to 200, and the fiber having an average outer diameter of from 2 to 500 nm,
   wherein the ratio of the average fiber length after the crushing treatment to the average fiber length before the crushing treatment is 0.8 or less, and
   wherein the ratio of the specific surface area after the crushing treatment to the specific surface area before the crushing treatment is 1.1 or more.
4. The production method for the carried catalyst as in 3 above, wherein supporting of the catalyst metal is performed by a liquid phase reduction method.
5. The production method for the carried catalyst as in 3 above, wherein, after being crushed, the vapor-grown carbon fiber is subjected to a thermal treatment at a temperature of from 2000°C to 3000°C in an atmosphere of an inert gas.
6. The production method for the carried catalyst as in 3 above, wherein, before being crushed, the vapor-grown carbon fiber is subjected to a thermal treatment at a temperature of from 2000°C to 3000°C in an atmosphere of an inert gas.
7. The production method for the carried catalyst as in 3 above, wherein the crushing is performed by dry crushing using an impact force.
8. The production method for the carried catalyst as in 7 above, wherein the crushing is performed in an atmosphere containing oxygen in a concentration of 5% by volume or more.
9. An electrode material, wherein a catalyst layer comprising a carried catalyst as in 1 or 2 above is formed on an electrically conductive base material.
10. A membrane electrode assembly for a fuel battery, which comprises an electrode wherein a catalyst layer and a gas diffusion layer are provided on both faces of an electrolyte membrane, being characterized in that the catalyst layer comprises the electrode material as described in 9 above.
11. A cell of a fuel battery, comprising the membrane electrode assembly for the fuel battery as described in 10 above which is sandwiched by separators.
12. A fuel battery, comprising two or more of the cells for the fuel battery as described in 11 above being laminated one on another.

### BRIEF DESCRIPTION OF THE DRWAINGS

FIG. 1 is a schematic vertical cross-sectional diagram showing a structure in the vicinity of an end portion of a conventional fine carbon fiber;
FIG. 2 is a schematic vertical cross-sectional diagram showing a structure in the vicinity of an end portion of another conventional fine carbon fiber;
FIG. 3 is a schematic vertical cross-sectional diagram for explaining a structure in the vicinity of an end portion of a fine carbon fiber to be used in the present invention;
FIG. 4 is a schematic vertical cross-sectional diagram for explaining a structure in the vicinity of an end portion of a fine carbon fiber to be used in the present invention;
FIG. 5 is a schematic side view seen from a direction of an end portion of the fiber according to FIG. 4;
FIG. 6 is a schematic vertical cross-sectional diagram for explaining a structure in the vicinity of an end portion of a fine carbon fiber to be used in the present invention;
FIG. 7 is a schematic vertical cross-sectional diagram for explaining a structure in the vicinity of an end portion of a fine carbon fiber to be used in the present invention;
FIG. 8 is a schematic vertical cross-sectional diagram for explaining a structure in the vicinity of an end portion of a fine carbon fiber to be used in the present invention;
FIG. 9 is a schematic vertical cross-sectional diagram for explaining structures in the vicinities of both end portions of a fine carbon fiber to be used in the present invention;
FIG. 10 is a schematic vertical cross-sectional diagram for explaining structures in the vicinities of both end portions of a fine carbon fiber to be used in the present invention;
FIG. 11 is a transmission electron micrograph of the catalyst carrier according to Example 1;
FIG. 12 is a transmission electron micrograph of the catalyst carrier according to Example 2;
FIG. 13 is a transmission electron micrograph of the catalyst carrier according to Example 3;
FIG. 14 is a transmission electron micrograph of the catalyst carrier according to Example 4;
FIG. 15 is a transmission electron micrograph of the catalyst carrier according to Comparative Example 1;
FIG. 16 is a transmission electron micrograph of the catalyst carrier according to Comparative Example 2;
FIG. 17 is a transmission electron micrograph of the catalyst carrier according to Comparative Example 3; and
FIG. 18 is a graph showing Tafel plots of fuel batteries using catalyst carriers according to Examples 1 to 4 and Comparative Examples 1 to 3.

### DETAILED DESCRIPTION OF THE INVENTION

Hereinafter, the present invention will be described in detail.

A vapor-grown carbon fiber to be used as a carrier of a carried catalyst of the present invention has an average outer diameter of from 2 to 500 nm and has been subjected to a crushing treatment so as to have a BET specific surface area of from 4 to 500 m²/g and an aspect ratio of from 1 to 200. Preferably, the average outer diameter is from 15 to 200 nm; the BET specific surface area is from 10 to 200 m²/g; and the aspect ratio is from 2 to 150. Further, an average fiber length is from 2 to 100 µm. By using as a carrier the vapor-grown carbon fiber which has been subjected to the crushing treatment so as to have properties within the respective ranges as described above, when a catalyst metal is carried thereon, the carrier is capable of carrying the catalyst metal while being in a state of particles having a small diameter and a large specific surface area and, as a result, a catalytic activity can be enhanced.

The crushing treatment has preferably been performed such that an average fiber length after the treatment becomes 0.8 or less when the average fiber length before the treatment is taken as 1. Further, the crushing treatment has preferably been performed such that a BET specific surface area after the treatment becomes 1.1 or more and, more preferably, 1.4 or more, when the BET specific surface area before the treatment is taken as 1.

The vapor-grown carbon fiber to be used in the present invention preferably contains a branched carbon fiber, and thereby an electric conductive pass of the carbon fiber is formed and, accordingly, electric conductivity as the carried catalyst can be enhanced.

The vapor-grown carbon fiber to be used in the present invention is prepared by subj ecting a fine carbon fiber produced by a vapor phase method to a crushing treatment. Performing the crushing treatment enables to produce a fine carbon fiber having a multi-layer structure, which comprises a discontinuous surface of a graphene sheet having a fracture surface at an end portion of the fiber; a continuous surface formed by combining an end portion of at least one graphene sheet with an end portion of an adjacent graphene sheet; and a hollow space in a center axis. By such a structure as described above, electric resistance of the carbon fiber is reduced and electric conductivity as a catalyst carrier is enhanced.

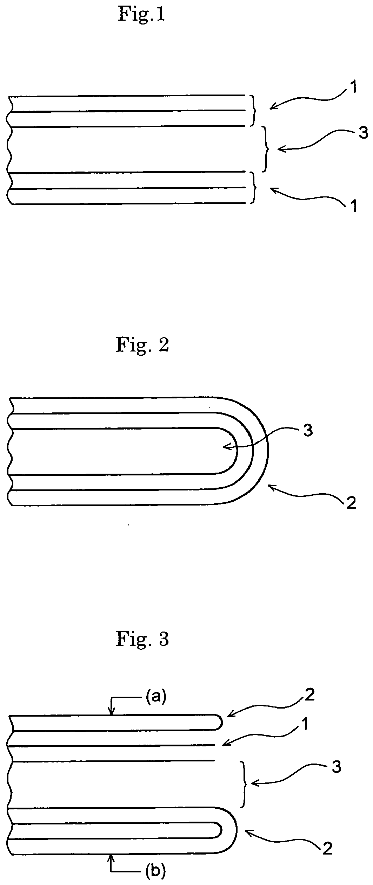

Characteristics of the fine carbon fiber are described with reference to FIGS. 1 to 10. In these figures, graphene sheets (layers of graphite or crystals similar to graphite) are schematically shown in solid lines.

As shown in a schematic vertical cross-sectional diagram according to FIG. 1 or 2, the fine carbon fiber comprises a discontinuous surface (1) of a graphene sheet having a fracture surface or a closed surface (2) having a continuous surface of the graphene sheets at the end portion of a fiber, and a hollow space (3).

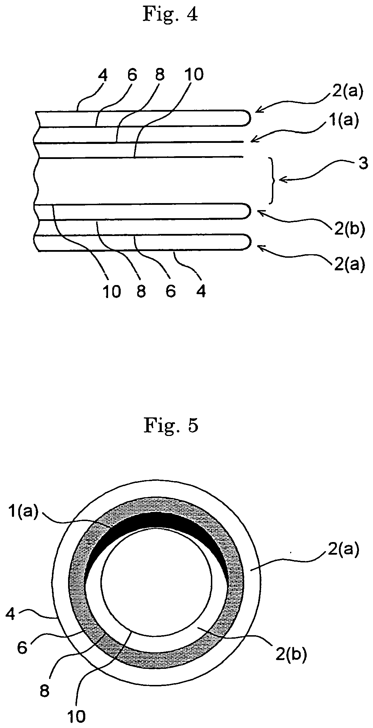

On the other hand, as shown in a schematic cross-sectional diagram according to FIG. 3 or 4, a preferred mode of the fine carbon fiber according to the invention is such a fine carbon fiber having a hollow space (3) produced by a vapor phase method, which comprises a discontinuous surface (1) of a graphene sheet having a fracture surface at an end portion of the fiber and a continuous surface (2) formed by combining an end portion of at least one graphene sheet and an end portion of an adjacent graphene sheet. The fracture surface denotes a plane generated by crushing or the like. Continuity of the graphene sheets is broken at the fracture surface, to thereby allow an edge carbon atom at a fracture portion inside a basal surface, an edge carbon atom at a border portion of a crystallite or the like to appear. The fracture surface is, for example, an end surface at approximately right angles to a center axis of the carbon fiber. Even in the fiber having a low aspect ratio (1 to 200), the hollow space and a multi-layer structure (growth ring structure) are maintained.

The carbon fiber according to FIG. 3 has a closed surface (2) having two continuous surfaces of the graphene sheets; in one portion (a), two adjacent graphene sheets are combined with each other at respective endportions, while, in the other portion (b), among adjacent four graphene sheets, outermost two graphene sheets are combined with each other at end portions, while inner two graphene sheets are combined with each other at end portions, respectively. The discontinuous surface (1) of the graphene sheet is present at the side of a hollow space (3) adjacent to the portion (a).

The carbon fiber according to FIG. 4 is a carbon fiber comprising four layers (4, 6, 8, 10) of graphene sheets; outer two layers of the graphene sheets (4, 6) form continuous surfaces (2(a)) in which end portions thereof are combined with each other all over the circumference, while inner two layers of the graphene sheets (8, 10) simultaneously form a closed portion (2 (b)) having a continuous surface in which end portions thereof are combined with each other and a portion (1 (a)) in which end portions thereof have a discontinuous surface.

FIG. 5 is a schematic side view of the carbon fiber having the structure according to FIG. 4 seen from a direction of the end portion thereof. White portions show continuous surfaces (2 (a), 2 (b)), while ablackportion shows a discontinuous surface (1(a)). A center portion is a hollow portion, while a grey portion shows an interface between graphene sheets (6) and (8) . A continuous surface of the graphene sheets which is present at an end of the fine carbon fiber is continuous also in the direction of the circumference; however, it is considered that the discontinuity may be generated also in the direction of the circumference by an influence of a defect caused by crushing, a thermal treatment temperature, an impurity component other than carbon, etc.

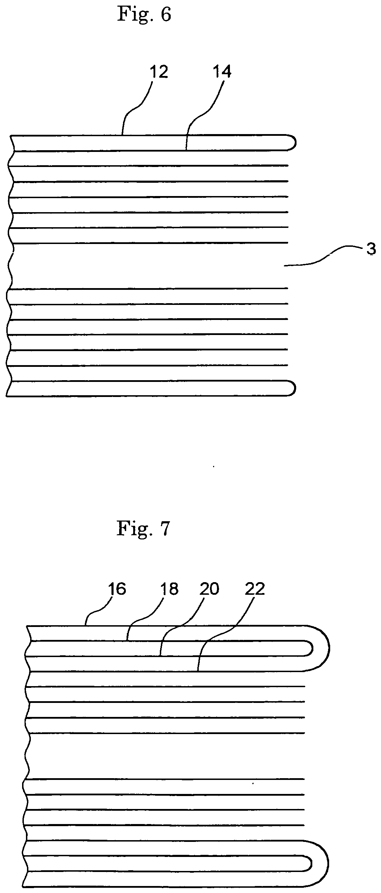

Each of FIGS. 6 to 8 shows a carbon fiber comprising eight layers of the graphene sheets.

In FIG. 6, outer two layers of the graphene sheets (12, 14) form a continuous surface in which end portions thereof are combined with each other all over the circumference, while each of the other six layers of the graphene sheets forma discontinuous surface.

In FIG. 7, an outermost layer of the graphene sheet (16) and the fourth from the outermost layer of the graphene sheet (22), and the second and the third layers from the outermost layer of the graphene sheet (18, 20) which are adjacent to each other are combined with each other respectively at the end portions to form continuous surfaces all over the circumference, while each of the other four layers of the graphene sheets form a discontinuous surface.

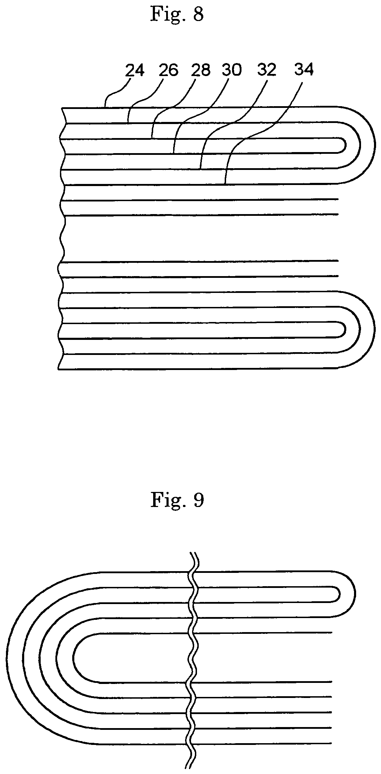

In FIG. 8, an outermost layer of the graphene sheet (24) and the sixth layer from the outermost layer of the graphene sheet (34), the second and fifth layers from the outermost layer of the graphene sheet (26, 32), and the third and fourth layers from the outermost layer of the graphene sheet (28, 30) which are adjacent to each other are combined with each other respectively at the end portions to form continuous surfaces all over the circumference, while each of the other two layers of the graphene sheets form a discontinuous surface.

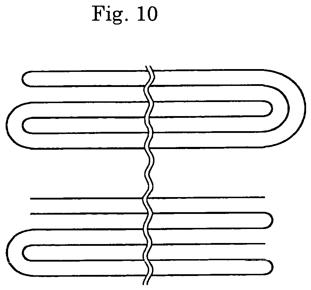

Each of FIGS. 9 and 10 shows an entire picture of a fine carbon fiber. FIG. 9 shows a mode in which one end of the fiber forms only continuous surfaces in the same manner as conventional and the other end has both continuous and discontinuous surfaces, while FIG. 10 shows a mode in which both ends of the fiber have both continuous and discontinuous surfaces.

The continuous surface which exists in the same surface as the fracture surface shows a surface in which a defect is generated in the graphene sheet laminated by thermal chemical vapor deposition and, accordingly, the graphene sheet has lost the regularity and is combined with an adjacent graphene sheet; or a fracture end of a graphene sheet is recombined with an end of another graphene sheet by a high temperature treatment of 2000°C or more. A curved portion of the continuous surface comprises one or more of graphene sheets; however, in a case in which the number of the laminated graphene sheets is small, namely, in a case in which a curvature radius of such curved graphene sheets is small, the fiber is hard to stably exist since a surface energy of the curved portion is large, and therefore, the number of the laminated graphene sheets at the curved portion is preferably three more, more preferably five or more and, particularly preferably, five to ten.

The vapor-grown carbon fiber used in the present invention can be produced by crushing a vapor-grown carbon fiber produced by a vapor phase method and, preferably, a carbon fiber comprising a branched carbon fiber (produced by a method as described in, for example, JP-A-2002-266170 (WO02/49412)).

The vapor-grown carbon fiber to be used in such production can ordinarily be obtained by thermally decomposing an organic compound while using an organic transition metal compound as a catalyst. The organic compound which can serve as a raw material for the carbon fiber is a compound selected from among toluene, benzene, naphthalene, gases such as ethylene, acetylene, ethane, a natural gas, carbon monoxide and the like and mixtures thereof. Thereamong, aromatic hydrocarbons such as toluene and benzene are preferred. The organic transition metal compound is selected from ferrocene and nickelocene.

The carbon fiber is, preferably, a carbon fiber in which an interlayer distance (d₀₀₂) of a hexagonal carbon layer (002) by an X-ray diffractometry is 0.345 nm or more, and is a carbon fiber having a ratio (Id/Ig) of a peak height (Id) of the band at 1341 to 1349 cm⁻¹ to a peak height (Ig) of the band at 1570 to 1578 cm⁻¹ in a Raman scattering spectrum of 1 or more. In this case, Id denotes a broad band region corresponding to an increase of irregularity of a carbon structure, while Ig denotes a relatively sharp band region associated with a perfect graphite structure.

Raw materials to be crushed can be subjected to a thermal treatment at 600 to 1300°C in order to remove an organic substance such as tar attached on a surface of the carbon fiber obtained by thermal decomposition.

As for crushing methods, a rotary crusher, a high-speed mill, a ball mill, a medium stirring mill, which adopts a method of crushing the fiber using an impact force, a jet crusher and the like can be utilized. Particularly, a vibrating mill such as a circular vibrating mill, a gyratory vibrating mill or a centrifugal mill is preferred. As for crushing media, ceramics balls of alumina, zirconia, silicon nitride and the like, or metal balls of stainless steel and the like can be used. Among these, stainless steel balls which can be removed by a high-temperature thermal treatment are preferred.

Further, it is advantageous to perform a dry type crushing in the absence of water and/or an organic solvent, since it is not necessary to perform a post-treatment step such as removing a dispersant after the crushing, drying the solvent or crushing a dry coagulated fiber.

The crushing is preferably performed in an atmosphere having an oxygen concentration of 5% by volume or more. By allowing oxygen to be present in a volume of 5% or more, a surface of a crushed carbon fiber is modified, to thereby facilitate a catalyst metal to be carried. The crushing is preferably performed in the air.

Further, in a pretreatment or a post-treatment of the crushing, a graphitization treatment can be performed for the purpose of enhancing electric conductivity of the vapor-grown carbon fiber. The graphitization treatment can be performed by carrying out a thermal treatment at 2000 to 3000°C in an atmosphere of an inert gas.

The carried catalyst according to the present invention comprises a crushed vapor-grown carbon fiber and a catalyst metal for promoting an oxidation-reduction reaction carried on the carbon fiber.

Catalyst metals for promoting the oxidation-reduction reaction are at least one element selected from the group consisting of transition metals belonging to the period 5 in the periodic table comprising platinum and other platinum group metals or alloys thereof, preferably, platinum group metals (palladium and platinum) or an alloy containing these metal elements.

A method for carrying the catalyst metal on the crushed vapor-grown carbon fiber is not particularly limited and is performed by, for example, a liquid phase reduction method. An example in which fine platinum particles are carried on the crushed vapor-grown carbon fiber by the liquid reduction method is described below.

Firstly, the crushed carbon fiber is dispersed in a distilled water and a pH value of the resultant dispersion is adjusted by using, for example, sodium carbonate. A dispersion operation can be performed by, for example, an ultrasonic wave treatment while confirming a dispersion condition by, for example, visual observation. Since the vapor-grown carbon fiber is high in hydrophobicity, it is preferable to enhance hydrophilicity by performing a surface treatment (hereinafter, referred to also as "hydrophilization treatment") on the carbon fiber in advance and, by this treatment, a specific surface area of the catalyst metal to be carried can be improved. The surface treatment can be performed in, for example, an acid solution (such as an aqueous nitric acid solution) for one to ten hours at 60 to 90°C.

To the resultant carbon fiber dispersion, an aqueous solution of chloroplatinic acid is added, thoroughly stirred and, then, an excess amount of a reducing agent such as formaldehyde is added to allow a reaction to proceed and, thereafter, a solid article is recovered by filtration. By drying the thus-recovered solid article in an atmosphere of an inert gas such as argon at 120 to 500°C, a catalyst carrier can be obtained in which platinum fine particles are carried on the vapor-grown carbon fiber.

The carried catalyst according to the present invention is a carried catalyst in which fine catalyst metal particles are carried on a vapor-grown carbon fiber as a carrier and has an improved catalyst activity per unit amount of the catalyst metal compared with a case in which a carrier in powder form such as carbon black is used. Further, by using the vapor-grown carbon fiber subjected to a crushing treatment, a grain diameter of the catalyst metal particles to be carried comes to be apparently small compared with a case in which the crushing treatment is not performed (namely, the specific surface area of the catalyst metal comes to be large). Specifically, it is possible to allow an average grain diameter of the catalyst metal to be carried to be 15 nm or less and, further, 10 nm or less, which enables to enhance the catalyst activity of the catalyst support and to obtain favorable characteristics for use in the electrode catalyst for the fuel battery.

The carried catalyst according to the present invention can be applied for an electrode material, a membrane electrode assembly for a fuel battery, a cell for a fuel battery and a fuel battery and these articles can be produced by a known method.

The electrode material according to the present invention can be produced by forming a catalyst layer containing the above-described carried catalyst on an electrically conductive base material such as carbon paper, carbon fiber woven fabric or carbon non-woven fabric. Formation of the catalyst layer can be performed by, for example, applying a slurry containing the catalyst carrier on an electrically conductive base material and, then, drying the resultant base material. The membrane electrode assembly for the fuel battery according to the present invention can be produced by thermally press-adhering the above-described electrode material comprising a gas diffusion layer and a catalyst layer on both surfaces of an electrolyte membrane. In a case in which the fuel battery is of a solid polymer type, the electrolyte membrane comprises a polymer material and, for example, a perfluorosulfonic acid type polymer can be used. A fuel battery cell can be prepared by sandwiching the membrane electrode assembly by separators having electric conductivity and two or more layers of such cell units are laminated one on another, to thereby prepare a fuel battery stack having a high output. Further, in order to suppress a leakage of an inner gas, it is also possible to provide a gasket between the electrolyte material and each of the separators.

### BEST MODE FOR CARRYING OUT THE INVENTION

Hereinafter, the present invention will specifically be described with reference to representative examples; however, these examples are given for an illustrative purpose only and by no means limit the invention.

Further, a ratio of an average fiber length was determined by obtaining average fiber lengths before and after carbon fibers were subjected to a crushing treatment in a cross-sectional photograph of carbon fibers by a transmission electron microscope (TEM). Further, a specific surface area was measured in accordance with a BET method which is an ordinary measuring method of the specific surface area by using a specific surface area measuring apparatus "NOVA-1200" manufactured by Yuasa-Ionics Co., Ltd.

### Example 1

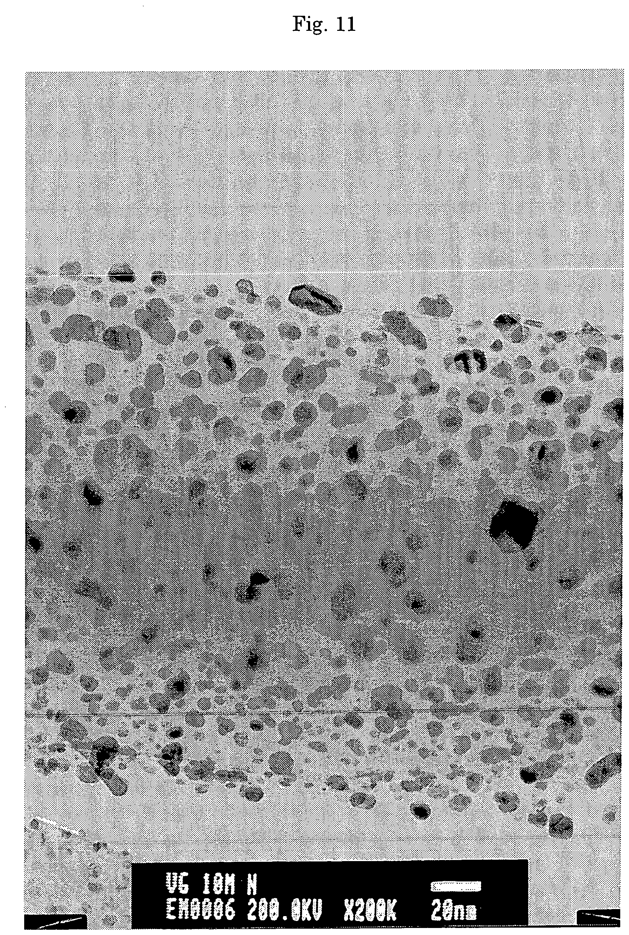

5 g of vapor-grown carbon fiber having an average outer diameter of 150 nm, a specific surface area of 13 m²/g and an average fiber length of 10 µm was loaded in a rotary crusher (stainless steel-made crushing blade, rotation rate: 25000 rpm) and subj ected to a crushing treatment for 10 minutes. Thereafter, a specific surface area and an average fiber length of the carbon fiber were measured and, as a result, the specific surface area and the average fiber length were 18 m²/g and 7.5 µm, respectively, which were 1.6 times and 0.75 times the original values, respectively. 0.2 g of the thus-crushed vapor-grown carbon fiber was dispersed in 50 ml of distilled water, 0.172 g of sodium carbonate was added and then, stirred with heat at 80°C. To the resultant dispersion, an aqueous solution containing 0.135 g of chloroplatinic acid was added dropwise, stirred for two hours and, then, a 35% aqueous solution of formaldehyde was added dropwise. After stirred for one hour, the resultant solution was filtered and, then, a solidmaterial was subjected to a drying treatment for two hours at 400°C in an atmosphere of argon, to thereby obtain a catalyst carrier in which a platinum grain was carried on a carbon fiber. A transmission electron microscope (TEM) photograph thereof is shown in FIG. 11.

Further, diameters of the platinum catalyst were measured by observing the TEM photograph, to thereby obtain a distribution of the diameters. As a result, an average diameter of the platinum catalyst particles was 8 nm.

### Example 2

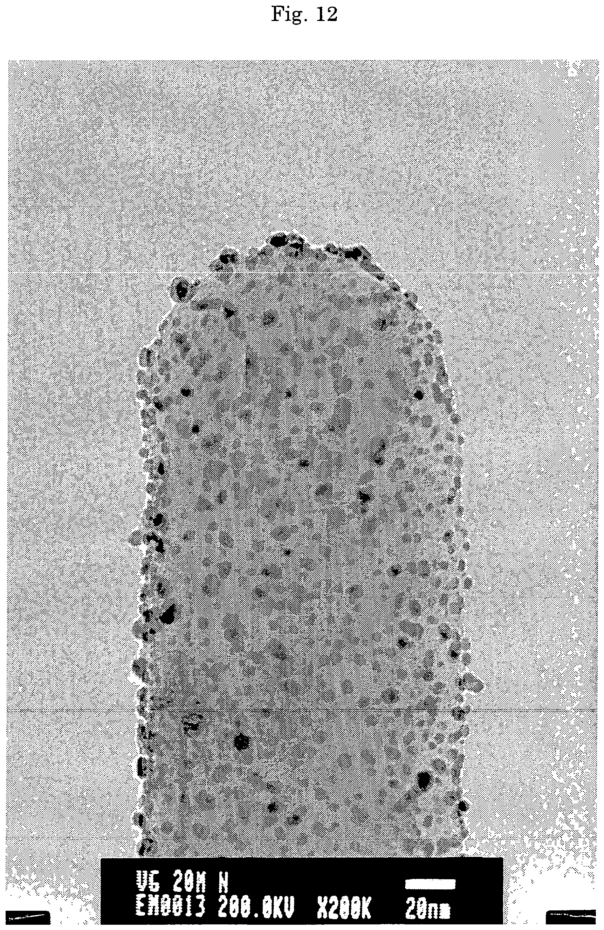

5 g of vapor-grown carbon fiber having an average outer diameter of 150 nm, a specific surface area of 13 m²/g and an average fiber length of 10 µm was loaded in a rotary crusher (stainless steel-made crushing blade, rotation rate: 25000 rpm) and subj ected to a crushing treatment for 20 minutes. Thereafter, a specific surface area and an average fiber length of the carbon fiber were measured and, as a result, the specific surface area and the average fiber length were 24 m²/g and 6. 0 µm, respectively, which were 1.8 times and 0.6 times the original values, respectively. 0.2 g of the thus-crushed vapor-grown carbon fiber was dispersed in 50 ml of distilled water, 0.172 g of sodium carbonate was added and then, stirred with heat at 80°C. To the resultant dispersion, an aqueous solution containing 0.135 g of chloroplatinic acid was added dropwise, stirred for two hours and then, a 35% aqueous solution of formaldehyde was added dropwise. After stirred for one hour, the resultant solution was filtered and, then, a solidmaterial was subj ected to a drying treatment for two hours at 400°C in an atmosphere of argon, to thereby obtain a catalyst carrier in which platinum particles were carried on a carbon fiber. A TEM photograph thereof is shown in FIG. 12.

Further, diameters of the platinum catalyst were measured by observing the TEM photograph, to thereby obtain a distribution of the diameters. As a result, an average diameter of the platinum catalyst particles was 5 nm.

### Example 3

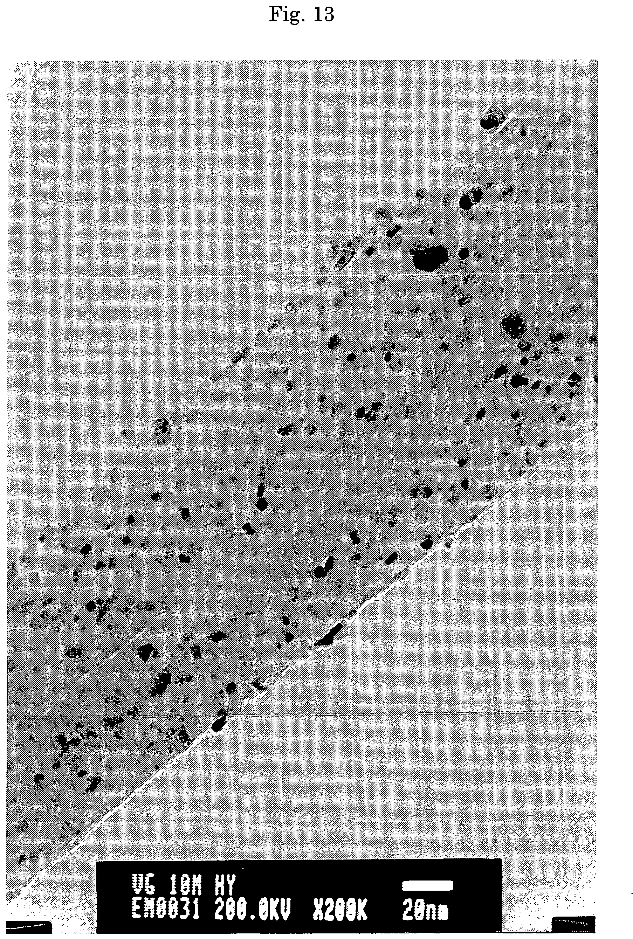

5 g of vapor-grown carbon fiber having an average outer diameter of 150 nm, a specific surface area of 13 m²/g and an average fiber length of 10 µm was loaded in a rotary crusher (stainless steel-made crushing blade, rotation rate: 25000 rpm) and subj ected to a crushing treatment for 10 minutes. Thereafter, a specific surface area and an average fiber length of the carbon fiber were measured and, as a result, the specific surface area and the average fiber length were 18 m²/g and 7.5 µm, respectively, which were 1.6 times and 0.75 times the original values, respectively. 0.2 g of the thus-crushed vapor-grown carbon fiber was, after being heated in a 60% aqueous solution of nitric acid for five hours at 70°C, dispersed in 50 ml of distilled water, 0.172 g of sodium carbonate was added and the dispersion was stirred with heat at 80°C. To the resultant dispersion an aqueous solution containing 0.135 g of chloroplatinic acid was added dropwise, stirred for two hours and then, a 35% aqueous solution of formaldehyde was added dropwise. After stirred for one hour, the resultant solution was filtered and, then, a solid material was subjected to a drying treatment for two hours at 400°C in an atmosphere of argon, to thereby obtain a catalyst carrier in which platinum particles were carried on a carbon fiber. A TEM photograph thereof is shown in FIG. 13.

Further, diameters of the platinum catalyst were measured by observing the TEM photograph, to thereby obtain a distribution of the diameters. As a result, an average diameter of the platinum catalyst particles was 6 nm.

### Example 4

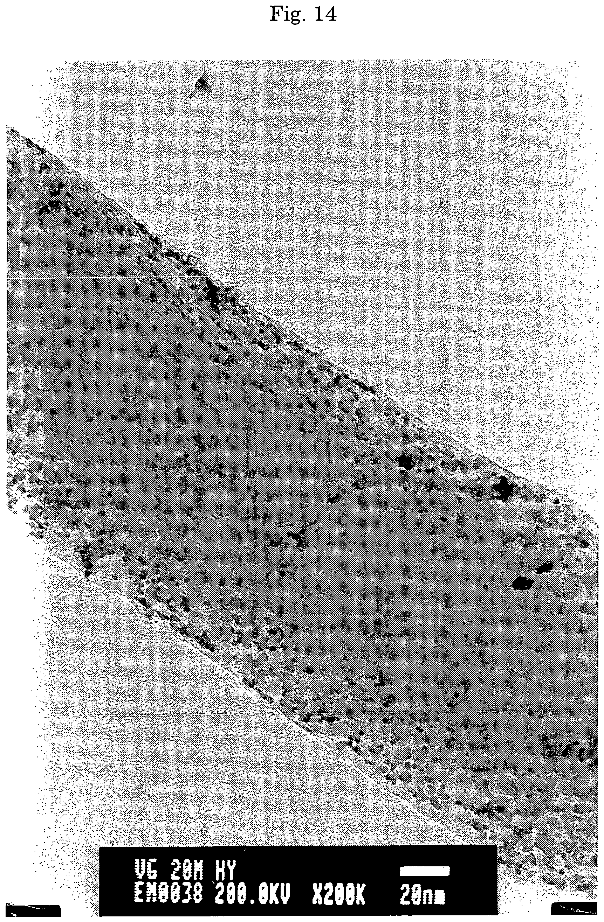

5 g of vapor-grown carbon fiber having an average outer diameter of 150 nm, a specific surface area of 13 m²/g and an average fiber length of 10 µm was loaded in a rotary crusher (stainless steel-made crushing blade, rotation rate: 25000 rpm) and subj ected to a crushing treatment for 20 minutes. Thereafter, a specific surface area and an average fiber length of the carbon fiber were measured and, as a result, the specific surface area and the average fiber length were 24 m²/g and 6.0 µm, respectively, which were 1.8 times and 0.6 times the original values, respectively. 0.2 g of the thus-crushed vapor-grown carbon fiber was, after being heated in a 60% aqueous solution of nitric acid for five hours at 70°C, dispersed in 50 ml of distilled water, 0.172 g of sodium carbonate was added and the dispersion was stirred with heat at 80°C. To the resultant dispersion an aqueous solution containing 0.135 g of chloroplatinic acid was added dropwise, stirred for two hours and then, a 35% aqueous solution of formaldehyde was added dropwise. After stirred for one hour, the resultant solution was filtered and, then, a solid material was subjected to a drying treatment for two hours at 400°C in an atmosphere of argon, to thereby obtain a catalyst carrier in which platinum particles were carried on a carbon fiber. A TEM photograph thereof is shown in FIG. 14.

Further, diameters of the platinum catalyst were measured by observing the TEM photograph, to thereby obtain a distribution of the diameters. As a result, an average diameter of the platinum catalyst particles was 3 nm.

### Comparative Example 1

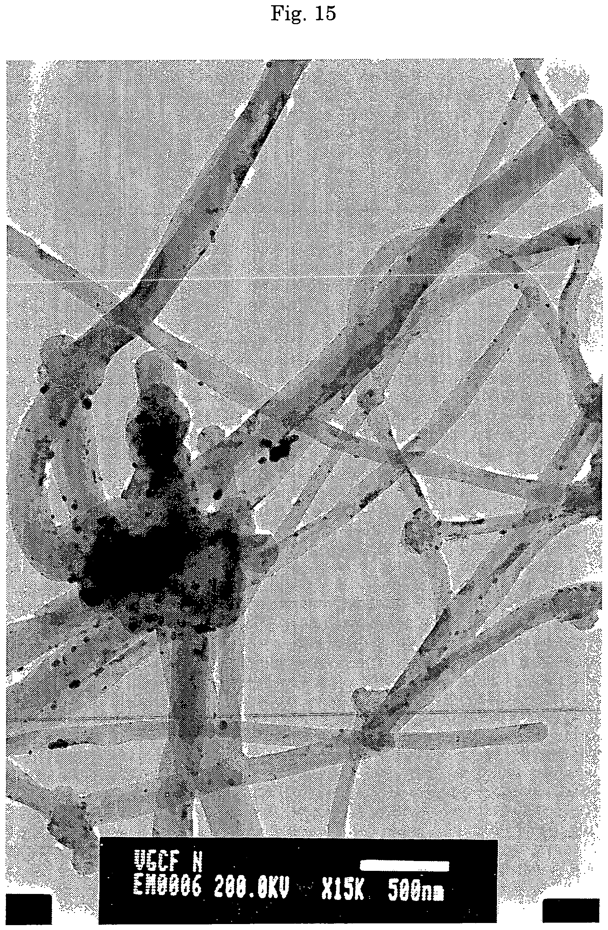

Same operations were performed as in Example 1 except that the crushing treatment was not performed, to thereby obtain a catalyst carrier in which platinum particles were carried on the carbon fiber. A TEM photograph thereof is shown in FIG. 15. Further, diameters of the platinum catalyst were measured by observing the TEMphotograph, to thereby obtain a distribution of the diameters. As a result, an average diameter of the platinum catalyst particles was 19 nm.

### Comparative Example 2

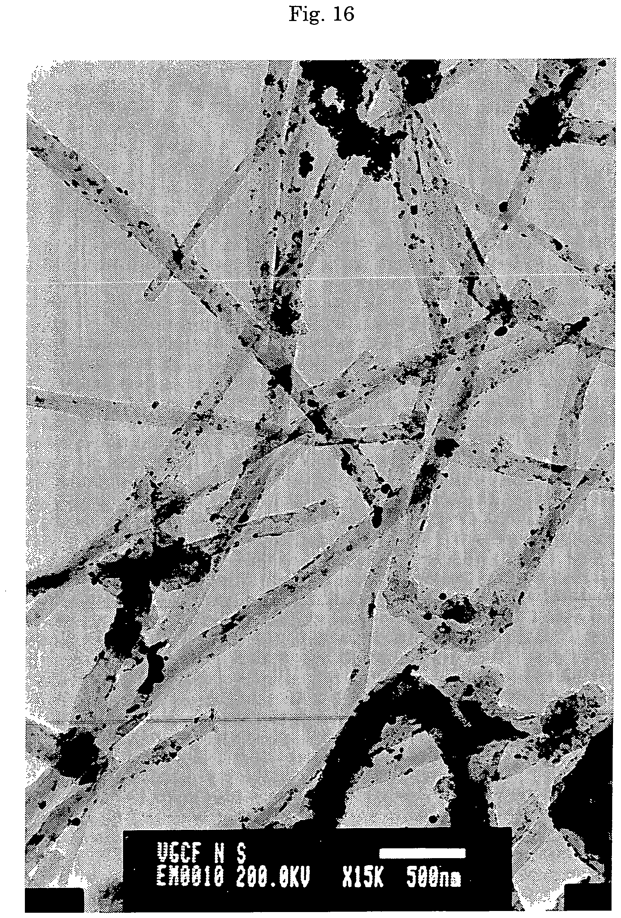

Same operations were performed as in Example 3 except that the crushing treatment was not performed, to thereby obtain a catalyst carrier in which platinum particles were carried on the carbon fiber. A TEM photograph thereof is shown in FIG. 16. Further, diameters of platinum catalyst were measured by observing the TEM photograph, to thereby obtain a distribution of the diameters. As a result, an average diameter of the platinum catalyst particles was 23 nm.

### Comparative Example 3

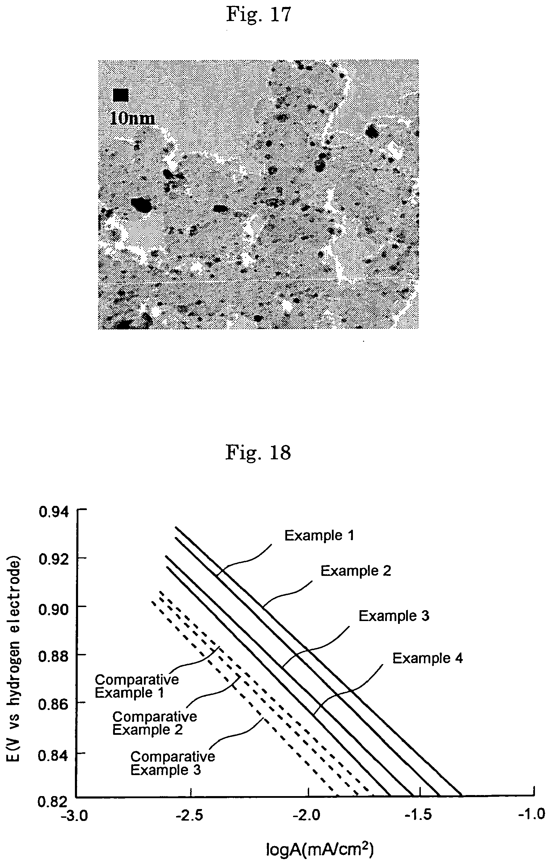

Carbon black available in the market (under the name of Vulcan XC-72R manufactured by Cabot Inc. having a specific surface area of 230 m²/g) was used as it was. 0.2 g thereof was, after being heated for five hours at 70°C in a 60% aqueous solution of nitric acid, dispersed in 50 ml of distilled water, sodium carbonate was added and the dispersion was stirred with heat at 80°C. An aqueous solution containing 0.135 g of chloroplatinic acidwas addeddropwise thereto, and the resultant dispersion was stirred for two hours and then, a 35% aqueous solution of formaldehyde was added dropwise. After stirred for one hour, the resultant solution was filtered and then, a solid material was subjected to a drying treatment for two hours at 400°C in an atmosphere of argon, to thereby obtain a catalyst carrier in which platinum particles were carried on carbon black. A TEM photograph thereof is shown in FIG. 17.

Further, diameters of the platinum catalyst were measured by observing the TEM photograph, to thereby obtain a distribution of the diameters. As a result, an average diameter of the platinum catalyst particles was 2 nm.

**Table 1: Treating conditions and powder characteristics**

| | Time (min.) | Specific Surface Area (m²/g) | Hydrophilization treatment | Average diameter of platinum particles (nm) |
|---|---|---|---|---|
| Example 1 | 10 | 18 | Not performed | 8 |
| Example 2 | 20 | 24 | Not performed | 5 |
| Example 3 | 10 | 18 | Performed | 6 |
| Example 4 | 20 | 24 | Performed | 3 |
| Comparative Example 1 | | 13 | Not performed | 19 |
| Comparative Example 2 | | 13 | Performed | 23 |
| Comparative Example 3 | | 230 | Performed | 2 |

### Experiment Example: Electrochemical measurement

Each of the catalyst carriers prepared according to Examples 1 to 4 and Comparative Examples 1 to 3 was mixed with a NAFION solution and the resultant mixture was applied on a carbon electrode, and an electrochemical measurement was performed by using the resultant electrode.

Activity per unit amount of a catalyst metal was evaluated from Tafel plots determined by an absolute value of a current density, a logarithmic number of the current density and a potential at a given voltage measured by a slow scan voltamogram (SSV). A 3-electrode type battery was used in an experiment, wherein a glassy carbon electrode was used as a working electrode, a platinum electrode as a counter electrode, and a hydrogen electrode as a reference electrode.

As for a measurement condition, a current value was measured while a voltage was changed from 1.2 V to 0.4 V at a scanning rate of 1 mV/sec. In order to standardize the thus-measured current values to be a current density (mA/cm²), a surface area of the electrode was obtained by using a cyclic voltammetry. The measurement of the surface area of the electrode was conducted with reference to a method as described in Denkikagaku Sokuteiho (Electrochemical Measuring Method) (Vol. I), Gihodo Shuppan Co., Ltd., p 88.

Results are shown in Table 2. The order of the absolute values of the current density at a voltage of 0.5 V in Examples was as follows: Example 2 > Example 1 > Example 3 = Example 4 > Comparative Example 1 = Comparative Example 2 >> Comparative Example 3.

Further, Tafel plots determined by a logarithmic number of current density at a voltage of from 0.82 V to 0.94 V and the voltage are shown in FIG. 18. As is apparent from FIG. 18, it is found that, when any one of the catalysts in Examples 1 to 4 was used in such a voltage range as described above, a higher current density was able to be obtained compared with a case in which any one of the catalysts in Comparative Examples was used and, accordingly, a catalyst performance has been enhanced.

**Table 2: Current density (mA/cm²) by SSV measurement**

| | -0.7V | -0.6V | -0.5V |
|---|---|---|---|
| Example 1 | -0.2 | -0.3 | -0.4 |
| Example 2 | -0.3 | -0.4 | -0.5 |
| Example 3 | -0.2 | -0.2 | -0.3 |
| Example 4 | -0.2 | -0.2 | -0.3 |
| Comparative Example 1 | -0.15 | -0.2 | -0.2 |
| Comparative Example 2 | -0.15 | -0.2 | -0.2 |
| Comparative Example 3 | -0.05 | -0.06 | -0.06 |

## Claims

1. A carried catalyst, being **characterized in that** at least one catalyst metal for promoting an oxidation-reduction reaction selected from the group consisting of platinum and transition metals belonging to the period 5 in the periodic table or any one of alloys thereof is carried on a vapor-grown carbon fiber,
- wherein the fiber has been synthesized by using ferrocene or nickelocene as a catalyst,
- the fiber has been subjected to a crushing treatment so as to have a BET specific surface area of from 4 m²/g to 500 m²/g, an average fiber length of from 2 to 100 µm and an aspect ratio of from 1 to 200, and the fiber having an average outer diameter of from 2 nm to 500 nm,
- wherein the fiber has a multi-layer structure of graphene sheets including a hollow space in its center portion, wherein the graphene sheets have a growth ring structure, and
- wherein the fiber has a ratio (Id/Ig) of a peak height (Id) of the band at 1341 to 1349 cm⁻¹ to a peak height (Ig) of the band at 1570 to 1578 cm⁻¹ in a Raman scattering spectrum of 1 or more,
- wherein the average grain diameter of the catalyst metal carried on the crushed vapour-grown carbon fiber is 15 nm or less.

2. The carried catalyst as claimed in claim 1, wherein the vapor-grown carbon fiber is a carbon fiber comprising a branched vapor-grown carbon fiber.

3. A production method for a carried catalyst of claim 1 or 2, **characterized by** supporting said catalyst metal or said any one of alloys thereof on said vapor-grown carbon fiber, which has been obtained by thermally decomposing hydrocarbon by using ferrocene or nickelocene as a catalyst, and optionally performing a thermal treatment of the thus-obtained vapor-grown carbon fiber at a temperature of from 600°C to 1300°C in an atmosphere of an inert gas, which have been crushed so as to have a BET specific surface area of from 4 m²/g to 500 m²/g, an average fiber length of from 2 to 100 µm and an aspect ratio of from 1 to 200, and the fiber having an average outer diameter of from 2 to 500 nm,
wherein the ratio of the average fiber length after the crushing treatment to the average fiber length before the crushing treatment is 0.8 or less, and
wherein the ratio of the specific surface area after the crushing treatment to the specific surface area before the crushing treatment is 1.1 or more.

4. The production method for the carried catalyst as claimed in claim 3, wherein supporting of the catalyst metal is performed by a liquid phase reduction method.

5. The production method for the carried catalyst as claimed in claim 3, wherein, after being crushed, the vapor-grown carbon fiber is subjected to a thermal treatment at a temperature of from 2000°C to 3000°C in an atmosphere of an inert gas.

6. The production method for the carried catalyst as claimed in claim 3, wherein, before being crushed, the vapor-grown carbon fiber is subjected to a thermal treatment at a temperature of from 2000°C to 3000°C in an atmosphere of an inert gas.

7. The production method for the carried catalyst as claimed in claim 3, wherein the crushing is performed by dry crushing using an impact force.

8. The production method for the carried catalyst as claimed in claim 7, wherein the crushing is performed in an atmosphere containing oxygen in a concentration of 5% by volume or more.

9. An electrode material, wherein a catalyst layer comprising a carried catalyst as claimed in claim 1 or 2 is formed on an electrically conductive base material.

10. A membrane electrode assembly for a fuel battery, which comprises an electrode wherein a catalyst layer and a gas diffusion layer are provided on both faces of an electrolyte membrane, being **characterized in that** the catalyst layer comprises the electrode material as claimed in claim 9.

11. A cell of a fuel battery, comprising the membrane electrode assembly for the fuel battery as claimed in claim 10 which is sandwiched by separators.

12. A fuel battery, comprising two or more of the cells for the fuel battery as claimed in claim 11 being laminated one on another.

## Patentansprüche

1. Trägerkatalysator, **dadurch gekennzeichnet, dass** mindestens ein Katalysatormetall zur Förderung einer Oxidations-Reduktions-Reaktion, ausgewählt aus der Gruppe, bestehend aus Platin und Übergangsmetallen, die zur Periode 5 im Periodensystem gehören, oder einer Legierung davon, auf/von einer gasphasengezüchteten Kohlenstofffaser getragen wird,
- wobei die Faser unter Verwendung von Ferrocen oder Nickelocen als Katalysator synthetisiert worden ist,
- die Faser einer Zerkleinerungsbehandlung derart unterzogen worden war, dass diese einen spezifischen Oberflächenbereich nach BET von 4 m²/g bis 500 m²/g, eine mittlere Faserlänge von 2 bis 100 µm und ein Aspektverhältnis von 1 bis 200 aufweist, und wobei die Faser einen mittleren Außendurchmesser von 2 nm bis 500 nm aufweist,
- wobei die Faser eine Mehrschichtstruktur aus Graphenschichten aufweist und ein Hohlraum im zentralen Bereich enthalten ist, wobei die Graphenschichten eine Wachstumsringstruktur aufweisen, und
- wobei die Fasern ein Verhältnis (Id/Ig) einer Peakhöhe (Id) der Bande bei 1341 bis 1349 cm⁻¹ zur Peakhöhe (Ig) der Bande bei 1570 bis 1578 cm⁻¹ im Raman-Streuspektrum von 1 oder mehr haben,
- wobei der mittlere Korndurchmesser des Katalysatormetalls, das auf/von den zerkleinerten gasphasengezüchteten Kohlenstofffasern getragen wird, 15 nm oder weniger ist.

2. Trägerkatalysator nach Anspruch 1, wobei die gasphasengezüchteten Kohlenstofffasern Kohlenstofffasern sind, die verzweigte gasphasengezüchtete Kohlenstofffasern umfassen.

3. Herstellungsverfahren für einen Trägerkatalysator nach Anspruch 1 oder 2, **gekennzeichnet durch** Stützen des Katalysatormetalls oder einer der Legierungen davon auf der gasphasengezüchteten Kohlenstofffaser, erhalten durch thermische Zersetzung von Kohlenwasserstoff unter Verwendung von Ferrocen oder Nickelocen als Katalysator, und wahlweise Durchführen einer Wärmebehandlung der so erhaltenen gasphasengezüchteten Kohlenstofffaser bei einer Temperatur von 600°C bis 1300°C in einer Inertgasatmosphäre, wobei die Fasern derart zerkleinert worden waren, dass sie einen spezifischen Oberflächenbereich nach BET von 4 m²/g bis 500 m²/g aufweisen, eine mittlere Faserlänge von 2 bis 100 µm und ein Aspektverhältnis von 1 bis 200, und wobei die Fasern einen mittleren Außendurchmesser von 2 bis 500 nm aufweisen,
wobei das Verhältnis der mittleren Faserlänge nach der Zerkleinerungsbehandlung zur mittleren Faserlänge vor der Zerkleinerungsbehandlung 0,8 oder weniger ist, und
wobei das Verhältnis des spezifischen Oberflächenbereichs nach der Zerkleinerungsbehandlung zu dem spezifischen Oberflächenbereich vor der Zerkleinerungsbehandlung 1,1 oder mehr ist.

4. Herstellungsverfahren für den Trägerkatalysator nach Anspruch 3, wobei das Stützen des Katalysatormetalls durch ein Flüssigphasen-Reduktionsverfahren durchgeführt wird.

5. Herstellungsverfahren für den Trägerkatalysator nach Anspruch 3, wobei nach dem Zerkleinern die gasphasengezüchtete Kohlenstofffaser einer Wärmebehandlung bei einer Temperatur von 2000°C bis 3000°C in einer Inertgasatmosphäre unterzogen wird.

6. Herstellungsverfahren für den Trägerkatalysator nach Anspruch 3, wobei vor der Zerkleinerung die gasphasengezüchtete Kohlenstofffaser einer Wärmebehandlung bei einer Temperatur von 2000°C bis 3000°C in einer Inertgasatmosphäre unterzogen wird.

7. Herstellungsverfahren für den Trägerkatalysator nach Anspruch 3, wobei das Zerkleinern durch Trockenzerkleinern unter Verwendung einer Stoßkraft durchgeführt wird.

8. Herstellungsverfahren für den Trägerkatalysator nach Anspruch 7, wobei das Zerkleinern in einer Sauerstoff enthaltenden Atmosphäre in einer Konzentration von 5 Vol.-% oder mehr durchgeführt wird.

9. Elektrodenmaterial, bei dem eine Katalysatorschicht, welche einen Trägerkatalysator nach Anspruch 1 oder 2 enthält, auf einem elektrisch leitfähigen Basismaterial gebildet ist.

10. Membranelektrodenanordnung für eine Brennstoffzelle, umfassend eine Elektrode, worin eine Katalysatorschicht und eine Gasdiffusionsschicht auf beiden Flächen einer Elektrolytmembran vorgesehen sind, **dadurch gekennzeichnet, dass** die Katalysatorschicht das Elektrodenmaterial nach Anspruch 9 umfasst.

11. Zelle einer Brennstoffzelle, umfassend die Membranelektrodenanordnung für die Brennstoffzelle nach Anspruch 10, welche durch Separatoren eingeklemmt ist.

12. Brennstoffzelle, umfassend zwei oder mehr der Zellen für die Brennstoffzelle nach Anspruch 11, wobei diese aufeinander geschichtet sind.

## Revendications

1. Catalyseur supporté, **caractérisé en ce qu'**au moins un métal catalytique destiné à favoriser une réaction d'oxydoréduction, choisi dans le groupe se composant du platine et des métaux de transition appartenant à la période 5 du tableau périodique des éléments ou de l'un quelconque des alliages de ceux-ci, est supporté sur une fibre de carbone obtenue par croissance en phase vapeur,
- dans lequel la fibre a été synthétisée en utilisant le ferrocène ou le nickelocène comme catalyseur,
- la fibre a été soumise à un traitement d'écrasement de manière à avoir une aire de surface spécifique BET de 4 m²/g à 500 m²/g, une longueur de fibre moyenne de 2 à 100 µm et un rapport de forme de 1 à 200, et la fibre ayant un diamètre extérieur moyen de 2 nm à 500 nm,
- dans lequel la fibre possède une structure multicouche de feuilles de graphène comprenant un espace creux dans sa portion centrale, dans lequel les feuilles de graphène ont une structure de croissance annulaire, et
- dans lequel la fibre a un rapport (Id/Ig) entre une hauteur de pic (Id) de la bande à 1341 à 1349 cm⁻¹ et une hauteur de pic (Ig) de la bande à 1570 à 1578 cm⁻¹ dans un spectre de diffusion de Raman de 1 ou plus,
- dans lequel le diamètre de grain moyen du métal catalytique supporté sur la fibre de carbone écrasée obtenue par croissance en phase vapeur est de 15 nm ou moins.

2. Catalyseur supporté selon la revendication 1, dans lequel la fibre de carbone obtenue par croissance en phase vapeur est une fibre de carbone comprenant une fibre de carbone ramifiée obtenue par croissance en phase vapeur.

3. Procédé de production pour un catalyseur supporté selon la revendication 1 ou 2, **caractérisé par** le support dudit métal catalytique ou d'un quelconque des alliages de celui-ci sur ladite fibre de carbone obtenue par croissance en phase vapeur, qui a été produit par décomposition thermique d'un hydrocarbure en utilisant du ferrocène ou du nickelocène comme catalyseur, et en réalisant éventuellement un traitement thermique de la fibre de carbone obtenue par croissance en phase vapeur ainsi produite à une température allant de 600 °C à 1300 °C dans une atmosphère de gaz inerte, qui a été écrasée de manière à avoir une aire de surface spécifique BET de 4 m²/g à 500 m²/g, une longueur de fibre moyenne de 2 à 100 µm et un rapport de forme de 1 à 200, et la fibre ayant un diamètre extérieur moyen de 2 à 500 nm,
dans lequel le rapport entre la longueur de la fibre moyenne après le traitement d'écrasement et la longueur de fibre moyenne avant le traitement d'écrasement est de 0,8 ou moins, et
dans lequel le rapport entre l'aire de surface spécifique après le traitement d'écrasement et l'aire de surface spécifique avant le traitement d'écrasement est de 1,1 ou plus.

4. Procédé de production pour le catalyseur supporté selon la revendication 3, dans lequel le support du métal catalytique est réalisé par un procédé de réduction de la phase liquide.

5. Procédé de production pour le catalyseur supporté selon la revendication 3, dans lequel, après avoir été écrasée, la fibre de carbone obtenue par croissance en phase vapeur est soumise à un traitement thermique à une température de 2000 °C à 3000 °C dans une atmosphère de gaz inerte.

6. Procédé de production pour le catalyseur supporté selon la revendication 3, dans lequel, avant d'être écrasée, la fibre de carbone obtenue par croissance en phase vapeur est soumise à un traitement thermique à une température de 2000 °C à 3000 °C dans une atmosphère de gaz inerte.

7. Procédé de production pour le catalyseur supporté selon la revendication 3, dans lequel l'écrasement est réalisé par écrasement à sec en utilisant une force d'impact.

8. Procédé de production pour le catalyseur supporté selon la revendication 7, dans lequel l'écrasement est réalisé dans une atmosphère contenant de l'oxygène en une concentration de 5 % en volume ou plus.

9. Matériau d'électrode, dans lequel une couche catalytique comprenant un catalyseur supporté selon la revendication 1 ou 2 est formée sur un matériau de base électriquement conducteur.

10. Ensemble d'électrodes à membrane pour une pile à combustible, qui comprend une électrode dans laquelle une couche catalytique et une couche de diffusion gazeuse sont placées sur les deux faces d'une membrane d'électrolyte, **caractérisé en ce que** la couche catalytique comprend le matériau d'électrode selon la revendication 9.

11. Cellule d'une pile à combustible, comprenant l'ensemble d'électrodes à membrane pour la pile à combustible selon la revendication 10, qui est prise en sandwich par des écarteurs.

12. Pile à combustible, comprenant deux cellules, ou plus, pour la pile à combustible selon la revendication 11, stratifiées l'une sur l'autre.
